# EUROPEAN PATENT SPECIFICATION

(11) **EP 3 112 418 B1**
(45) Date of publication and mention of the grant of the patent: **20.03.2019**
(21) Application number: 14889259.9
(22) Date of filing: 17.09.2014
(51) Int. Cl.: C08L 25/08, C08L 53/02, C08K 5/01, F25D 23/08, C08L 23/08

(54) **HIPS MATERIAL, COMPOSITE BOARD MATERIAL AND REFRIGERATION EQUIPMENT HAVING COMPOSITE BOARD MATERIAL**
HIPS-MATERIALIEN, VERBUNDPLATTENMATERIAL UND KÜHLAUSRÜSTUNG MIT DEM VERBUNDPLATTENMATERIAL
MATÉRIAU À BASE DE HIPS (POLYSTYRÈNE CHOC), MATÉRIAU COMPOSITE EN PANNEAU ET ÉQUIPEMENT DE RÉFRIGÉRATION PRÉSENTANT LE MATÉRIAU COMPOSITE EN PANNEAU

(30) Priority: 18.04.2014 CN 201410158836
(43) Date of publication of application: 04.01.2017
(73) Proprietor: Hefei Hualing Co., Ltd., Hefei, Anhui 230601 (CN); Hefei Midea Refrigerator Co., Ltd., Hefei, Anhui 230601 (CN)
(72) Inventor: SHI, Xiangzuo, Hefei Anhui 230601 (CN); REN, Yuanyuan, Hefei Anhui 230601 (CN); HUO, Yaonan, Hefei Anhui 230601 (CN); JIA, Li, Hefei Anhui 230601 (CN); HUANG, Ling, Hefei Anhui 230601 (CN)
(74) Representative: Germinario, Claudio
(86) International application number: PCT/CN2014/086728
(87) International publication number: WO 2015/158106

(56) References cited:
- CN-A- 101 225 203
- CN-A- 101 544 806
- CN-A- 101 544 806
- CN-A- 102 964 709
- CN-A- 103 319 834
- CN-A- 103 524 843
- CN-A- 103 951 925
- KR-B1- 100 788 248
- DATABASE WPI Week 201415 Thomson Scientific, London, GB; AN 2013-Q96457 XP002774355, & CN 103 113 703 A (HEFEI MIDEA ROYALSTAR REFRIGERATOR CO LT) 22 May 2013 (2013-05-22)

## Description

### FIELD

The present disclosure relates to a material processing field, in particularly to a high impact polystyrene (HIPS) material, a composite panel and a refrigeration device having the composite panel.

### BACKGROUND

In the related art, a high light panel used in a refrigerator/freezer is generally a HIPS composite panel, and mainly used in high-end or exported refrigerator/freezer liner. Typically, a panel layer is high light HIPS, i.e., common high light polystyrene, such as HIPS-1180 (Styron), which has an advantage of higher glossiness, and defeats of low strength, fragility, and low corrosion resistant. A liner, in particularly a liner of the body, obtained thereof easily cracks, thus bringing a quality issue. Because the common high light polystyrene is fragile, and is of a low glossiness, and meanwhile an elongation is big after thermoforming, the high light layer of the liner is nonuniform, and the actual glossiness is low, thus increasing the risk of cracking during use of the liner.

Therefore, the current composite panel needs to be further studied.

CN103319 834 relates to a refrigerated device frame composition comprising at least 55 pbw high impact polystyrene (HIPS), at least 15 pbw polyethylene, 15-25 pbw styrene-butadiene-styrene rubber, 2-5 pbw compatibilizer and 0.5-1 pbw auxiliary agent (e.g. lubricant). CN101544806 relates to a polystyrene ternary blend used for refrigerator inner liner plates comprising at least 20 % HIPS, at least 15 % of linear low-density polyethylene, less than 25 % of ethane-butadiene-styrene copolymer compatibilizer, 0.1-0.6 % of antioxidant and 0.1-0.6 % of calcium stearate.

CN102964709 relates to a composition for a refrigerator liner comprising polystyrene, a toughening agent and softener which is a naphthenic oil. The composition may further contain an adjuvant (additive). The naphthenic oil and adjuvant is included in the mass ration of 0.01 to 0.12 : 1.04 to 1.37 (about 0.7 to 12 % by mass) which overlaps the claimed range of 1 to 10 parts by weight.

### SUMMARY

Embodiments of the present disclosure seek to solve at least one of the problems existing in the related art to at least some extent. Accordingly, an object of the present disclosure is to provide a HIPS material, a composite panel and a refrigeration device having the composite panel. The HIPS material has higher glossiness and good corrosion resistance.

In a first aspect of the present disclosure, HIPS material is provided. The HIPS material includes: 45 to 55 parts by weight of HIPS,
15 to 25 parts by weight of rubber,
10 to 15 parts by weight of polyethylene,
1 to 10 parts by weight of naphthenic oil, and
1 to 10 parts by weight of an additive.

The HIPS material according to embodiments of the present disclosure has higher glossiness and good corrosion resistance.

Additionally, the composite panel according to the above embodiment of the present disclosure further has additional technical features as follows:
In some embodiments of the present disclosure, the HIPS is at least one selected from HIPS-1180, HIPS-888G and HIPS-825G.

The rubber has an average molecular weight of 50000 to 300000. Thus, the rigidity of the HIPS material may be significantly decreased.

In some embodiments of the present disclosure, the rubber is at least one selected from styrene-ethylene-butylene-styrene block copolymer (SEBS), styrene-butylene-styrene block copolymer (SBS), butadiene-styrene rubber and cis-polybutadiene. Thus, the rigidity of the HIPS material may be further increased.

In some embodiments of the present disclosure, the rubber has a particle size of 0.5 to 1.5 µm. Thus, the rigidity of the HIPS material may be further decreased.

The polyethylene has a density of 0.8 to 1.1 g/cm³. Thus, the corrosion resistance of the HIPS material may be significantly improved.

In some embodiments of the present disclosure, the naphthenic oil has a viscosity of 45 to 55 mm²/S. Thus, the glossiness of the HIPS material may be significantly improved.

In some embodiments of the present disclosure, the naphthenic oil is at least one selected from KG16C, KN4006 and KN4010. Thus, the glossiness of the HIPS material may be further improved.

In some embodiments of the present disclosure, the additive includes at least one of a stabilizer, a dispersant and a compatilizer. Thus, a combination property of the HIPS material may be significantly improved.

In some embodiments of the present disclosure, the stabilizer is at least one of a Ba/Cd compound stabilizer, a Ba/Zn compound stabilizer and a Ca/Zn compound stabilizer.

In some embodiments of the present disclosure, the dispersant is at least one of polyethylene wax and polyethylene glycol.

In some embodiments of the present disclosure, the compatilizer is at least one of RPS, PE-g-ST and PP-g-ST.

In a second aspect of the present disclosure, a composite panel is provided. In one embodiment of the present disclosure, the composite panel includes:
a substrate, and
a panel layer formed on an upper surface of the substrate and formed of the HIPS material described above.

The composite panel according to embodiments of the present disclosure has the higher glossiness and the good corrosion resistance.

Additionally, the composite panel according to the above embodiment of the present disclosure further has additional technical features as follows:
In some embodiments of the present disclosure, the panel layer is formed on the upper surface of the substrate by co-extrusion for a composite panel.

In some embodiments of the present disclosure, the substrate is at least one selected from HIPS 2710 (BASF-YPC), HIPS 2710(BASF, South Korea), HIPS 8265 (TOTAL) and HIPS 825S (TAIHUA, Ningbo, China).

In some embodiments of the present disclosure, a thickness of the panel layer accounts for 1 to 5 %, for example 2%, of that of the composite panel.

In a third aspect of the present disclosure, a refrigeration device is provided. In one embodiment of the present disclosure, the refrigeration device includes the composite panel described above.

In the refrigeration device according to embodiments of the present disclosure, the composite panel described above having the high light and the corrosion resistance is used as a panel layer material of the liner of the refrigeration device, so that the panel layer of the liner has the higher glossiness and the good corrosion resistance. In particularly, a corrosion cracking resistance to cooking oil and detergents may be significantly improved. Aesthetics of the refrigeration device is improved and the repair rates and the rates of complaints caused by the cracking of the liner of the refrigeration device are decreased at the same time, so as to solve the problem about the corrosion cracking of the liner of the refrigeration device.

Additionally, the refrigeration device according to the above embodiment of the present disclosure further has additional technical features as follows:
In some embodiments of the present disclosure, the refrigeration device is a refrigerator or a freezer.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

These and other aspects and advantages of embodiments of the present disclosure will become apparent and more readily appreciated from the following descriptions made with reference to the drawings, in which:
Fig. 1 is a schematic view of a composite panel according to an embodiment of the present disclosure.

### DETAILED DESCRIPTION

Reference will be made in detail to embodiments of the present disclosure. The same or similar elements and the elements having same or similar functions are denoted by like reference numerals throughout the descriptions. The embodiments described herein with reference to drawings are explanatory, illustrative, and used to generally understand the present disclosure. The embodiments shall not be construed to limit the present disclosure.

In a first aspect of the present disclosure, HIPS material is provided. The HIPS material comprises: 45 to 55 parts by weight of HIPS, 15 to 25 parts by weight of rubber, 10 to 15 parts by weight of polyethylene, 1 to 10 parts by weight of naphthenic oil, and 1 to 10 parts by weight of an additive. The inventors have found that the HIPS material with such composition have the higher glossiness, the excellent elongation and the good corrosion resistance. Specifically, notch impact strength of the HIPS material is ≥ 10KJ/M², and tensile strength is ≥ 25 MPa, elongation at break is ≥ 55%, and glossiness is ≥ 85 GU (measured under a condition of 60 GU).

According to some embodiments of the present disclosure, a specific type of the HIPS is not particularly limited in the composition of the HIPS material. In some embodiments of the present disclosure, the HIPS is at least one selected from HIPS-1180, HIPS-888G and HIPS-825G. Specifically, HIPS may be used as a base stock.

According to some embodiments of the present disclosure, a specific type of the rubber is not particularly limited in the composition of the HIPS material. In some embodiments of the present disclosure, the rubber has an average molecular weight of 50000 to 300000. The inventors have found that low molecular weight rubber has excellent ageing resistance, and at the same time has plasticity, high elasticity and good machinability, so that the rigidity of the HIPS material may be significantly decreased. For example, the rubber is at least one selected from SEBS, SBS, butadiene-styrene rubber and cis-polybutadiene. According to embodiments of the present disclosure, the particle size of the rubber is not particularly limited. In some embodiments of the present disclosure, the rubber has the particle size of 0.5 to 1.5 µm. The inventors have found that the rubber with the smaller particle size may be distributed more uniformly in a mixture, so as to decrease the rigidity of the HIPS material significantly as the modified material.

According to some embodiments of the present disclosure, a specific type of the polyethylene is not particularly limited in the composition of the HIPS material. The polyethylene has a density of 0.8 to 1.1 g/cm³. The inventors have found that low density polyethylene may reduce toughness and improve stress corrosion cracking resistance of the material, so that the corrosion resistance of the HIPS material may be significantly improved by low density polyethylene.

According to some embodiments of the present disclosure, a specific type of the naphthenic oil is not particularly limited in the composition of the HIPS material The naphthenic oil has a viscosity of 45 to 55 mm²/S. Specifically, the naphthenic oil may be a saturated naphthenic oil. For example, the naphthenic oil is at least one selected from KG16C, KN4006 and KN4010. The inventors have found that if a viscosity of the naphthenic oil is too low, the tensile strength and the elongation at break of HIPS material may be decreased, so that the rigidity of the material is too low, however, if the viscosity is too high, the rigidity of the material may be too high.

According to some embodiments of the present disclosure, a specific type of the additive is not particularly limited in the composition of the HIPS material. In some embodiments of the present disclosure, the additive includes at least one of a stabilizer, a dispersant and a compatilizer. In a specific embodiment of the present disclosure, the stabilizer is at least one of a Ba/Cd compound stabilizer, a Ba/Zn compound stabilizer and a Ca/Zn compound stabilizer; the dispersant is at least one of polyethylene wax and polyethylene glycol; and the compatilizer is at least one of RPS, PE-g-ST and PP-g-ST. Thus, the combination property of the HIPS material may be improved significantly.

In a second aspect of the present disclosure, a composite panel is provided. With reference to Fig. 1, the composite panel according to embodiments of the present disclosure may be described in detail. In one embodiment of the present disclosure, the composite panel includes: a substrate 100 and a panel layer 200. In a specific embodiment of the present disclosure, the panel layer 200 is formed on an upper surface of the substrate 100 and formed of the HIPS material described above. Thus, the composite panel has the higher glossiness and the excellent corrosion resistance.

According to embodiments of the present disclosure, the combination form of the panel layer 200 and the substrate 100 is not particularly limited. In some embodiments of the present disclosure, the panel layer 200 is formed on the upper surface of the substrate 100 by co-extrusion for a composite panel. According to embodiments of the present disclosure, a specific type of the substrate 100 is not particularly limited. In some embodiments of the present disclosure, the substrate 100 may be HIPS, for example may be at least one selected from HIPS 2710 (BASF-YPC), HIPS 2710(BASF, South Korea), HIPS 8265 (TOTAL) and HIPS 825S (TAIHUA, Ningbo, China). According to embodiments of the present disclosure, the thickness of the panel layer 200 is not particularly limited. In a specific embodiment, a thickness of the panel layer 200 accounts for 1 to 5 %, for example 2%, of that of the composite panel. The inventors have found that if the thickness of the panel layer is too thin, the glossiness is insufficient, however if the thickness of the panel layer is too thick, the cost of material may be increased accordingly.

Specifically, in accordance with the composition, rubber, polyethylene and naphthenic oil are added into a blender mixer and mixed uniformly, and then HIPS is added into the blender mixer to be mixed uniformly under stirring, and finally the additive is added uniformly, thus obtaining a mixed material. A new HIPS material having high light and corrosion resistant may be obtained by granulation using a co-rotating twin screw extruder with a high length/diameter ratio (L/D) (L/D ≥ 36), which is added to the composite panel, as a panel layer material, in a thickness of the panel layer 200 accounting for 2% of that of the composite panel, so as to form the composite panel.

In a third aspect of the present disclosure, a refrigeration device is provided. In one embodiment of the present disclosure, the refrigeration device includes the composite panel described above. According to embodiments of the present disclosure, a specific type of the refrigeration device may not be particularly limited. In a specific embodiment of the present disclosure, the refrigeration device is a refrigerator or a freezer. Specifically, the composite panel may be thermoformed to form a body/door liner of the refrigerator or the freezer. The inventor have found that the composite panel having the high light and corrosion resistant described above is used as a panel layer material of the liner of the refrigeration device, so that the panel layer of the liner has the higher glossiness and the good corrosion resistance. In particularly, the corrosion cracking resistance to cooking oil and detergents may be significantly improved. Aesthetics of the refrigeration device is improved and the repair rates and the rates of complaints caused by the cracking of the liner of the refrigeration device are decreased at the same time, so as to solve the problem about the corrosion cracking of the liner of the refrigeration device.

Specifically, the HIPS material has the higher glossiness and the good distribution, and may be distributed uniformly during co-extrusion. It has the good tensile property and the high corrosion resistance at the same time. Therefore, effect of elongation generated during thermoforming of the body liner on HIPS may be minimized so as to greatly improve the glossiness of the liner and the corrosion resistance of the liner.

With reference to specific embodiments of the present disclosure, the disclosure is described in detail. It should be understood that these embodiments are only illustrated and shall not be construed to limit the present disclosure.

### Example 1

### Composition:

450 g of HIPS-1180, 150 g of SEBS (the average molecular weight of 50000 to 150000), 100 g of polyethylene (the density of 0.95 g/cm³), 10 g of KG16C (the viscosity of 48 mm²/S), 15 g of Ca/Zn compound stabilizer, 10 g of polyethylene wax and 12 g of RPS.

### Preparation method:

The rubber, the polyethylene and the naphthenic oil were added into a blender mixer and mixed uniformly, and then the HIPS was added into the blender mixer to be mixed uniformly under stirring, and finally the stabilizer, the dispersant and the compatilizer were added uniformly, thus obtaining a mixed material. A new HIPS material having the high light and corrosion resistance was obtained by granulation using a co-rotating twin screw extruder with a high length/diameter ratio (L/D) (L/D ≥ 36), which was added to the composite panel, as a panel layer, in a thickness of the panel layer accounting for 2% of that of the composite panel, so as to form the composite panel. The composite panel was thermoformed into the body/door liner of the refrigerator or the freezer.

### Example 2

### Composition:

550 g of HIPS-888G, 250 g of SEBS (the average molecular weight of 50000 to 150000), 150 g of polyethylene (the density of 0.95 g/cm³), 100 g of KG16C (the viscosity of 48 mm²/S), 10 g of Ba/Zn compound stabilizer, 15 g of polyethylene glycol and 12 g of PE-g-ST.

### Preparation method: the same as Example 1.

### Example 3

### Composition:

500 g of HIPS-825G, 200 g of SEBS (the average molecular weight of 50000 to 150000), 125 g of polyethylene (the density of 0.95 g/cm³), 50 g of KG16C (the viscosity of 48 mm²/S), 12 g of Ba/Cd compound stabilizer, 12 g of polyethylene wax and 8 g of PP-g-ST.

### Preparation method: the same as Example 1.

### Comparative Example 1

### Composition:

500 g of HIPS-825G, 200 g of SEBS (the average molecular weight of 50000 to 150000), 125 g of polyethylene (the density of 1.65 g/cm³), 50 g of KG16C (the viscosity of 48 mm²/S), 15 g of Ba/Cd compound stabilizer, 10 g of polyethylene wax and 12 g of PP-g-ST.

### Preparation method: the same as Example 1.

### Comparative Example 2

### Composition:

500 g of HIPS-825G, 200 g of SEBS (the average molecular weight of 50000 to 150000), 125 g of polyethylene (the density of 0.50 g/cm³), 50 g of KG16C (the viscosity of 48 mm²/S), 15 g of Ba/Cd compound stabilizer, 10 g of polyethylene wax and 12 g of PP-g-ST.

### Preparation method: the same as Example 1.

### Comparative Example 3

### Composition:

500 g of HIPS-825G, 200 g of SEBS (the average molecular weight of 450000 to 850000), 125 g of polyethylene (the density of 0.95 g/cm³), 5 g of KG16C (the viscosity of 48 mm²/S), 15 g of Ba/Cd compound stabilizer, 10 g of polyethylene wax and 12 g of PP-g-ST.

### Preparation method: the same as Example 1.

### Comparative Example 4

### Composition:

500 g of HIPS-825G, 200 g of SEBS (the average molecular weight of 10000 to 30000), 125 g of polyethylene (the density of 0.95 g/cm³), 5 g of KG16C (the viscosity of 48 mm²/S), 15 g of Ba/Cd compound stabilizer, 10 g of polyethylene wax and 12 g of PP-g-ST.

### Preparation method: the same as Example 1.

### Comparative Example 5

### Composition:

500 g of HIPS-825G, 200 g of SEBS (the average molecular weight of 50000 to 150000), 125 g of polyethylene (the density of 0.95 g/cm³), 5 g of KG16C (the viscosity of 60 mm²/S), 15 g of Ba/Cd compound stabilizer, 10 g of polyethylene wax and 12 g of PP-g-ST.

### Preparation method: the same as Example 1.

### Comparative Example 6

### Composition:

500 g of HIPS-825G, 200 g of SEBS (the average molecular weight of 50000 to 150000), 125 g of polyethylene (the density of 0.95 g/cm³), 5 g of KG16C (the viscosity of 40 mm²/S), 15 g of Ba/Cd compound stabilizer, 10 g of polyethylene wax and 12 g of PP-g-ST.

### Preparation method: the same as Example 1.

### Comparative Example 7

### Composition:

700 g of HIPS-825G, 400 g of SEBS (the average molecular weight of 50000 to 150000), 200 g of polyethylene (the density of 0.95 g/cm³), 200 g of KG16C (the viscosity of 48 mm²/S), 10 g of Ba/Cd compound stabilizer, 15 g of polyethylene wax and 10 g of PP-g-ST.

### Preparation method: the same as Example 1.

### Comparative Example 8

### Composition:

300 g of HIPS-825G, 50 g of cis-polybutadiene (the average molecular weight of 50000 to 150000), 200 g of polyethylene (the density of 0.95 g/cm³), 2 g of KG16C (the viscosity of 48 mm²/S), 10 g of Ba/Cd compound stabilizer, 6 g of polyethylene wax and 8 g of PP-g-ST.

### Preparation method: the same as Example 1.

### Comparative Example 9

### Composition:

300 g of HIPS-1180, 150 g of cis-polybutadiene (the average molecular weight of 400000 to 850000), 10 g of KN4006 (the viscosity of 60 mm²/S), 10 g of Ba/Cd compound stabilizer, 6 g of polyethylene wax and 8 g of PP-g-ST.

### Preparation method:

The HIPS-1180, cis-polybutadiene and the naphthenic oil were added into a blender mixer under stirring and mixed uniformly, and then the stabilizer, the dispersant and the compatilizer were added uniformly, thus obtaining a mixed material. HIPS material was obtained by granulation using a single screw extruder, which was added to the composite panel, as a panel layer, in a thickness of the panel layer accounting for 2% of that of the composite panel, so as to form the composite panel. The composite panel was thermoformed into a body/door liner of the refrigerator or the freezer.

### Evaluation:

1. The glossiness and corrosion resistance of each liner obtained from Examples 1 to 3 and Comparative Examples 1 to 9 were measured respectively.
2. Evaluation indexes and measurement methods:
   Glossiness: A glossmeter is used. The glossmeter is placed on an object to be measured and starts to measure by pressing the measure button. The surface glossiness of the object is shown on the display screen of the glossmeter, and the glossmeter beeps at the same time to represent a confirmed measurement.
   Corrosion resistance: using an environmental stress cracking resistance (ESCR) test, an effect of cooking oil on a strip of the liner of the refrigerator is evaluated. In the ESCR test, the strip is curved on a certain fixture to a certain strain level (in accordance with 25% strain) and then the cooking oil is applied to the highest strain area of the strip. The strip is exposed to the strain and the cooking oil continuously for a certain period (4h, 8h, and 24h respectively).

Results are shown in Table 1.

**Table 1**

| | glossiness/GU | corrosion resistance |
|---|---|---|
| Example 1 | 90 | excellent |
| Example 2 | 93 | excellent |
| Example 3 | 91 | excellent |
| Comparative Example 1 | 72 | medium |
| Comparative Example 2 | 70 | medium |
| Comparative Example 3 | 46 | poor |
| Comparative Example 4 | 80 | good |
| Comparative Example 5 | 73 | medium |
| Comparative Example 6 | 79 | good |
| Comparative Example 7 | 51 | poor |
| Comparative Example 8 | 37 | poor |
| Comparative Example 9 | 40 | poor |

Conclusion: it can be known from the above results that the liners obtained from Examples 1 to 3 of the present disclosure have higher glossiness and better corrosion resistances, and the liner of Example 2 has a best property in which the glossiness is up to 93 GU.

The densities of polyethylene in the composition of Comparative Examples 1-2 are not within the scope of the present disclosure. The molecular weights of rubber in the composition of Comparative Examples 3-4 are not within the scope of the present disclosure. The viscosities of the naphthenic oil in the composition of Comparative Examples 5-6 are not within the scope of the present disclosure. The contents of components in the composition of Comparative Examples 7-8 are not within the scope of the present disclosure. Comparative Example 9 is an existing technology (low density polyethylene is not added). With reference to data in Table 1, the glossiness and the corrosion resistance of liners obtained from Comparative Examples 1-9 are inferior to those of liners obtained from Examples 1 to 3, thus indicating that the density of polyethylene, the average molecular weights of rubber, the viscosities of naphthenic oil and contents of components may all have effect on the glossiness and the corrosion resistance of the liner, and the liner prepared according to the present disclosure has the higher glossiness and the excellent corrosion resistance.

Reference throughout this specification to "an embodiment," "some embodiments," "one embodiment", "another example," "an example," "a specific example," or "some examples," means that a particular feature, structure, material, or characteristic described in connection with the embodiment or example is included in at least one embodiment or example of the present disclosure. Thus, the appearances of the phrases such as "in some embodiments," "in one embodiment", "in an embodiment", "in another example," "in an example," "in a specific example," or "in some examples," in various places throughout this specification are not necessarily referring to the same embodiment or example of the present disclosure. Furthermore, the particular features, structures, materials, or characteristics may be combined in any suitable manner in one or more embodiments or examples.

Although explanatory embodiments have been shown and described, it would be appreciated by those skilled in the art that the above embodiments cannot be construed to limit the present disclosure, and changes, alternatives, and modifications can be made in the embodiments without departing from spirit, principles and scope of the present disclosure.

## Claims

1. A high impact polystyrene (HIPS) material, comprising:
45 to 55 parts by weight of HIPS,
15 to 25 parts by weight of rubber,
10 to 15 parts by weight of polyethylene,
1 to 10 parts by weight of naphthenic oil, and
1 to 10 parts by weight of an additive,
wherein
the rubber has an average molecular weight of 50000 to 300000,
the polyethylene has a density of 0.8 to 1.1 g/cm³, and
the naphthenic oil has a viscosity of 45 to 55 mm²/S.

2. The HIPS material according to claim 1, wherein the rubber is at least one selected from styrene-ethylene-butylene-styrene block copolymer (SEBS), styrene-butylene-styrene block copolymer (SBS), butadiene-styrene rubber and cis-polybutadiene.

3. The HIPS material according to claim 1 or 2, wherein the rubber has a particle size of 0.5 to 1.5 µm.

4. The HIPS material according to any one of claims 1 to 3, wherein the additive comprises at least one of a stabilizer, a dispersant and a compatilizer.

5. A composite panel, comprising:
a substrate, and
a panel layer formed on an upper surface of the substrate and formed of the HIPS material according to any one of claims 1 to 4.

6. The composite panel according to claim 5, wherein the panel layer is formed on the upper surface of the substrate by co-extrusion for a composite panel.

7. The composite panel according to claim 5 or 6, wherein a thickness of the panel layer accounts for 1 to 5 % of that of the composite panel.

8. The composite panel according to claim 7, wherein the thickness of the panel layer accounts for 2 % of that of the composite panel.

9. A refrigeration device, comprising the composite panel according to any one of claims 5 to 8.

## Patentansprüche

1. Hochschlagfestes Polystyrolmaterial ("High Impact Polystyrene" (HIPS)), umfassend:
45 bis 55 Gewichtsanteile HIPS,
15 bis 25 Gewichtsanteile Gummi,
10 bis 15 Gewichtsanteile Polyethylen,
1 bis 10 Gewichtsanteile naphthenisches Öl und
1 bis 10 Gewichtsanteile eines Additivs,
wobei
der Gummi ein durchschnittliches Molekulargewicht von 50000 bis 300000 aufweist,
das Polyethylen eine Dichte von 0,8 bis 1,1 g/cm³ aufweist und
das naphthenische Öl eine Viskosität von 45 bis 55 mm²/S aufweist.

2. HIPS-Material nach Anspruch 1, wobei der Gummi wenigstens einer ist, der aus der folgenden Gruppe ausgewählt ist: Styrol-Ethylen-Butylen-Styrol-Block-Copolymer ("styrene-ethylene-butylene-styrene" (SEBS)), Styrol-Butylen-Styrol-Block-Copolymer ("styrene-butylene-styrene" (SBS)), Butadien-Styrol-Gummi und cis-Polybutadien.

3. HIPS-Material nach Anspruch 1 oder 2, wobei der Gummi eine Teilchengröße von 0,5 bis 1,5 µm aufweist.

4. HIPS-Material nach einem der Ansprüche 1 bis 3, wobei das Additiv wenigstens eines von einem Stabilisierer, einem Dispergator und einem Compatibilizer umfasst.

5. Verbundplatte, umfassend:
ein Substrat und
eine Plattenschicht, die auf einer oberen Oberfläche des Substrats ausgebildet ist und aus dem HIPS-Material nach einem der Ansprüche 1 bis 4 gebildet ist.

6. Verbundplatte nach Anspruch 5, wobei die Plattenschicht auf der oberen Oberfläche des Substrats durch Co-Extrudierung für eine Verbundplatte gebildet ist.

7. Verbundplatte nach Anspruch 5 oder 6, wobei eine Dicke der Plattenschicht 1 bis 5 % derjenigen der Verbundplatte ausmacht.

8. Verbundplatte nach Anspruch 7, wobei die Dicke der Plattenschicht 2 % derjenigen der Verbundplatte ausmacht.

9. Kühlgerät mit einer Verbundplatte nach einem der Ansprüche 5 bis 8.

## Revendications

1. Matériau en polystyrène choc (HIPS) comprenant :
45 à 55 parties en poids de HIPS,
15 à 25 parties en poids de caoutchouc,
10 à 15 parties en poids de polyéthylène,
1 à 10 parties en poids d'huile naphténique, et
1 à 10 parties en poids d'un additif,
dans lequel
le caoutchouc a une masse moléculaire moyenne de 50 000 à 300 000,
le polyéthylène a une masse volumique de 0,8 à 1,1 g/cm³, et
l'huile naphténique a une viscosité de 45 à 55 m²/S.

2. Matériau en HIPS selon la revendication 1, dans lequel le caoutchouc est au moins l'un choisi parmi un copolymère séquencé de styrène-éthylène-butylène-styrène (SEBS), un copolymère séquencé de styrène-butylène-styrène (SBS), un caoutchouc de butadiène-styrène, et le cis-polybutadiène.

3. Matériau en HIPS selon la revendication 1 ou 2, dans lequel le caoutchouc a une granulométrie de 0,5 à 1,5 µm.

4. Matériau en HIPS selon l'une quelconque des revendications 1 à 3, dans lequel l'additif comprend au moins l'un parmi un stabilisant, un dispersant et un agent de compatibilité.

5. Panneau composite comprenant :
un substrat, et
une couche de panneau formée sur une surface supérieure du substrat et formée du matériau en HIPS selon l'une quelconque des revendications 1 à 4.

6. Panneau composite selon la revendication 5, dans lequel la couche de panneau est formée sur la surface supérieure du substrat par co-extrusion pour un panneau composite.

7. Panneau composite selon la revendication 5 ou 6, dans lequel l'épaisseur de la couche de panneau représente 1 à 5 % de celle du panneau composite.

8. Panneau composite selon la revendication 7, dans lequel l'épaisseur de la couche de panneau représente 2 % de celle du panneau composite.

9. Dispositif de réfrigération comprenant le panneau composite selon l'une quelconque des revendications 5 à 8.
